# EUROPÄISCHE PATENTANMELDUNG

(11) **EP 2 151 637 A2**
(43) Veröffentlichungstag der Anmeldung: **10.02.2010**
(21) Anmeldenummer: 09164012.8
(22) Anmeldetag: 29.06.2009
(51) Int. Cl.: F24D 17/00, F24D 17/02

(54) **Anordnung zur Bereitstellung von warmem Brauchwasser**

(30) Priorität: 07.08.2008 DE 102008036712
(71) Anmelder: Solvis GmbH & Co. KG, 38112 Braunschweig (DE)
(72) Erfinder: Form, Jochen, 38106 Braunschweig (DE); Kasper, Günther, 38530 Didderse (DE); Mundil, Steve, 38110 Braunschweig (DE); Wendker, Kai, 38106 Braunschweig (DE); Jäger, Helmut, 38533 Vordorf (DE)
(74) Vertreter: Einsel, Martin

(57) **Zusammenfassung**

Eine Anordnung zur Bereitstellung von warmen Brauchwasser besitzt einen Solarkreislauf (10), in dem ein erstes Fluid (11) gefördert wird. Der Solarkreislauf (10) weist einen Solarkollektor (12), eine Solarvorlaufleitung (13) vom Solarkollektor (12) zu einer Verbraucheranordnung (30) und eine Solarrücklaufleitung (14) und eine Verbraucheranordnung (30) zum Solarkollektor (12) auf. Die Anordnung zur Bereitstellung von warmen Brauchwasser besitzt darüber hinaus einen Solekreislauf (20), in dem ein zweites Fluid (21) gefördert wird. Der Solekreislauf (20) weist eine Einrichtung (22) zur Sammlung von Erdwärme oder Umweltwärme, eine Wärmepumpe (27), eine Solevorlaufleitung (23) von der Einrichtung (22) zur Sammlung von Erdwärme über die Wärmepumpe (27) zur Verbraucheranordnung (30) und eine Solerücklaufleitung (24) von der Verbraucheranordnung (30) zur Einrichtung (22) zur Sammlung von Erdwärme auf. Ein Wärmeübertrager (40) ist vorgesehen, durch den sowohl der Solarkreislauf (10) als auch der Solekreislauf (20) verlaufen. Der Wärmeübertrager (40) ist so aufgebaut und angeordnet, dass in ihm Wärme aus dem ersten Fluid (11) im Solarkreislauf (10) auf das zweite Fluid (21) im Solekreislauf (20) übertragen wird.

## Beschreibung

Die Erfindung betrifft eine Anordnung zur Bereitstellung von warmem Brauchwasser, mit einem Solarkreislauf, in dem ein erstes Fluid gefördert wird, wobei der Solarkreislauf einen Solarkollektor, eine Solarvorlaufleitung vom Solarkollektor zu einer Verbraucheranordnung und eine Solarrücklaufleitung von der Verbraucheranordnung zum Solarkollektor aufweist, mit einem Solekreislauf, in dem eine zweites Fluid gefördert wird, wobei der Solekreislauf eine Einrichtung zur Sammlung von Erdwärme oder Umweltwärme, eine Wärmepumpe, eine Solevorlaufleitung von der Einrichtung zur Sammlung von Erdwärme über die Wärmepumpe zur Verbraucheranordnung und eine Solerücklaufleitung von der Verbraucheranordnung, Wärmepumpe zur Einrichtung zur Sammlung von Erdwärme aufweist.

Anordnungen zur Bereitstellung von warmem Brauchwasser dienen insbesondere zur Trinkwassererwärmung. Eine Reihe von derartigen Anordnungen können außerdem für die Beheizung eines Gebäudes genutzt werden. Der Begriff Brauchwasser schließt also Trinkwasser, Heizungswasser und auch Wasser für andere Verwendungszwecke ein.

Eine der Möglichkeiten für eine derartige Anordnung ist der Einsatz einer Sole/Wasser-Wärmepumpenanlage. Eine solche Anlage fördert in einem Solekreislauf ein Fluid, die sogenannte Sole. Diese Sole kann in einigen Fällen durch reines Wasser ersetzt werden, ist in den meisten Fällen jedoch eine Flüssigkeit aus Wasser mit Zusätzen, die den Gefrierpunkt absenken. Diese Sole nimmt über einen Erdkollektor oder eine Erdsonde die im Erdreich letztlich durch die Sonne zuvor eingespeicherte Wärme auf. Die Sole wird in einer Wärmepumpe mittels Einsatz elektrischer Energie auf ein höheres, technisch nutzbares Temperaturniveau angehoben. Dieses höhere Temperaturniveau wird dann zur Erwärmung des Brauchwassers und ggf. für die Gebäudebeheizung eingesetzt. Dazu wird die Wärme aus dem Fluid mit dem jetzt höheren Temperaturniveau an einen Verbraucher oder einen Zwischenspeicher abgegeben und das wieder abgekühlte Fluid über einen Solerücklauf wieder dem Erdkollektor oder der Erdsonde zugeführt.

Ökologisch und ökonomisch interessant wäre dabei die Kopplung einer derartigen Wärmepumpenanlage mit einer thermischen Solaranlage. Eine Kombination aus einer Wärmegewinnung durch eine Solaranlage mit einer Wärmepumpe aus sogenannten Erdabsorbern, Erdsonden oder Erdkollektoren wird beispielsweise in der DE 103 23 713 A1 erwähnt.

Derartige thermische Solaranlagen lassen ebenfalls ein Fluid durch einen Kreislauf strömen, hier durch den Solarkreislauf. Dieses Fluid nimmt in einem Solarkollektor Wärme auf. Eine solche Anlage kann bei einer ausreichenden Sonneneinstrahlung die Brauchwassererwärmung nahezu vollständig übernehmen und außerdem zur Heizungsunterstützung genutzt werden. Vor allem außerhalb der Heizperiode kann somit die Wärmepumpe entlastet werden, da diese bei einer reinen Warmwassererzeugung in der Regel mit einem relativ schlechten Wirkungsgrad arbeitet.

Die über die Solaranlage gewonnene Wärme wird ebenso wie die aus der Wärmepumpenanlage meistens in einem Brauchwasserspeicher oder aber in einem Pufferspeicher zwischengespeichert, der beispielsweise ein aus der EP 0 384 423 B1 bekannter Speicher mit integriertem Schichtenlader sein kann. Zur bedarfsgerechten Regelung werden im einfachsten Fall die Temperatur der Flüssigkeit im Pufferspeicher einerseits und die Temperatur im Solarkollektor der Solaranlage andererseits verglichen. Bei einem ausreichenden Strahlungsangebot der Sonneneinstrahlung liegt die Temperatur des Kollektors oberhalb der Temperatur des Puffer- oder Brauchwasserspeichers. Solange die Differenz groß genug ist, kann dann weitere Wärmeenergie in den Puffer- oder Brauchwasserspeicher übertragen werden.

Nachdem dieser Vorgang einige Zeit durchgeführt wird, ist der Puffer- oder Brauchwasserspeicher ganz oder teilweise aufgeladen. Das vorhandene Strahlungsangebot der Sonne reicht dann nicht mehr aus, um das Temperaturniveau im Speicher noch weiter anzuheben. Diese Situation tritt beispielsweise in den Abendstunden oder auch im Herbst oder Frühling besonders häufig ein.

Wünschenswert wäre es, wenn die ökologisch und ökonomisch interessante Kopplung der Wärmepumpe mit einer thermischen Solaranlage weiter ausgebaut werden könnte.

Aufgabe der Erfindung ist es daher, eine weitere Verbesserung derartiger gekoppelter Wärmepumpen mit thermischen Solaranlagen bei Anordnungen zur Bereitstellung von warmem Brauchwasser vorzuschlagen.

Diese Aufgabe wird bei einer gattungsgemäßen Anlage erfindungsgemäß dadurch gelöst, dass ein Wärmeübertrager vorgesehen ist, durch den sowohl der Solarkreislauf als auch der Solekreislauf verlaufen, und dass der Wärmeübertrager so aufgebaut und angeordnet ist, dass in ihm Wärme aus dem ersten Fluid im Solarkreislauf auf das zweite Fluid im Solekreislauf übertragen wird.

Diese Lösung macht von einem interessanten Ansatz Gebrauch. Es werden jetzt nicht nur unabhängig voneinander einerseits die Wärmepumpe mit einem Pufferspeicher und die thermischen Solaranlage andererseits mit dem Pufferspeicher gekoppelt, sondern zusätzlich darüber hinaus auch der Solarkreis direkt über einen Wärmeübertrager mit dem Solekreis der Wärmepumpe.

Auf diese Weise kann nämlich das bisher nicht nutzbare Strahlungsangebot der thermischen Solaranlage, das nicht ausreicht, um das Temperaturniveau im Speicher noch weiter anzuheben, dazu verwendet werden, stattdessen das Temperaturniveau der aus dem Erdreich kommenden Wärmepumpen-Sole weiter anzuheben. Die Fluide der Wärmepumpe-Sole weisen Temperaturen zwischen -5 °C und +25 °C auf, typischerweise beträgt das Temperaturniveau zwischen etwa 5 °C und 10 °C und liegt damit deutlich unterhalb der Temperatur im Brauchwasser oder Pufferspeicher. Die Differenz der Temperatur im Kollektor zu diesen Temperaturen ist also deutlich höher als die Differenz der Kollektortemperatur gegenüber der Temperatur im Pufferspeicher.

Besonders bevorzugt ist es, wenn die Verbraucheranordnung einen Pufferspeicher aufweist, der seinerseits warmes Brauchwasser oder ein warmes drittes Fluid für einen oder mehrere verbraucherseitige Kreisläufe zur Verfügung stellt.

Die Verbraucheranordnung kann also entweder ein direkter Verbraucher sein oder einen oder mehrere direkte Verbraucher enthalten, denen das erfindungsgemäß gewonnene erwärmte Brauchwasser zugeführt wird. Bevorzugt ist es jedoch so, dass die Wärme zunächst einem Pufferspeicher zugeführt wird, beispielsweise, indem diesem ein erwärmtes Fluid zugeführt wird. Dafür bietet sich wiederum ein Pufferspeicher mit Schichtenlader an. Die in diesem Pufferspeicher gespeicherte Wärme wird dann entweder als erwärmtes Brauchwasser weitergeleitet oder nochmals über einen Wärmeübertrager die Wärme in einem Fluid in dem Pufferspeicher an das zu erwärmende Brauchwasser abgegeben.

Im Sinne dieser Erfindung ist damit der Pufferspeicher ein Teil der Verbraucheranordnung.

Die Anhebung der Temperatur der aus dem Erdreich kommenden Wärmepumpensole kann dann auf zwei Arten genutzt werden.

Zum Einen ist eine direkte Nutzung möglich. Bei einer laufenden Wärmepumpe bringt eine Anhebung der Temperatur des Solevorlaufs eine direkte Steigerung der Leistungszahl mit sich. Die Wärmepumpe leistet dann einen kleineren Temperaturhub bis hin zur gewünschten Solltemperatur auf der anderen Seite, nämlich auf der Kondensatorseite. Dazu benötigt sie eine geringere Verdichterleistung und damit dann auch weniger elektrische Energie. Diese reduzierte elektrische Energie ist ökologisch und natürlich ebenso auch ökonomisch vorteilhaft.

Bei einer indirekten Nutzung der erhöhten Temperatur der Wärmepumpensole ist folgendes zu berücksichtigen: Außerhalb der Betriebszeiten der Wärmepumpe gibt die erwärmte Sole über den Erdkollektor bzw. die Erdsonde die Wärme ans Erdreich ab. Das Erdreich dient damit als erweiterter Speicher für die Wärmeenergie. Diese eingespeicherte Energie kann zum Teil später wieder entnommen werden. Man erreicht eine schnellere Regeneration der Wärmequelle nach der Heizungsperiode.

Die Erfindung kann nicht nur mit Erdkollektoren oder Erdsonden arbeiten, sondern auch mit anderen Einrichtungen zur Sammlung von Erdwärme oder Umweltwärme, beispielsweise mit in der Erde angeordneten Speichern für Eis und/oder Wasser oder sogenanntes Latentmaterial, die thermisch mit der umgebenden Erde oder der umgebenden Flüssigkeit im Erdboden in Verbindung stehen und somit ebenfalls die Nutzung von Erdwärme oder Umweltwärme erlauben. Denkbar ist auch ein direkter Zugriff auf das Grundwasser, das ebenfalls eine Art Sammelstelle für Erdwärme oder Umweltwärme ist, die entsprechend genutzt werden kann.

Eine Eigenschaft von Erdwärme ist es, dass sie anders als Wärmequellen etwa im Feuerungsbereich weit niedrigere Temperaturen zur Verfügung stellt. Die Fluide in dem Solekreislauf weisen Temperaturen von etwa -5 °C bis +25 °C auf, typischerweise beträgt das Temperaturniveau zwischen etwa 5 °C und 10 °C.

Wärmepumpen sind an sich bekannt. Sie arbeiten mit einem Verdampfer und einem Kondensator, um den Temperaturhub für die gepumpte Sole zur Verfügung zu stellen.

Der Wirkungsgrad eines derartigen erweiterten Speichers ist allerdings abhängig von der jeweiligen Bodenbeschaffenheit. Erste Feldversuche mit der Erfindung deuten jedoch auf vielversprechende Ergebnisse hin. Eine Steigerung des Jahresnutzungsgrades der Wärmepumpenanlage in einem wirtschaftlich interessanten Maß ist damit auch durch diese indirekte Nutzung der Anhebung der Temperatur der Sole möglich.

Besonders bevorzugt ist es, wenn der eingesetzte Wärmeübertrager bei der Koppelung des Solarkreislaufes mit dem Solekreislauf ein Plattenwärmeübertrager ist. Plattenwärmeübertrager sind sehr bewährt und für eine hydraulische Trennung von zwei Kreisläufen auch sehr zuverlässig.

Diese hydraulische Trennung der beiden Kreisläufe bringt eine Reihe von Vorteilen.

So gibt es keine zusätzlichen Probleme im Stagnationsfeld der Solaranlage. Die Solaranlage mit dem Solarkreislauf verhält sich unverändert.

Es gibt keine Probleme mit einer möglichen Schädigung von Komponenten des Solekreislaufs, insbesondere der für diesen üblicherweise eingesetzten Erdkollektoren aus Kunststoff durch Dampfbildung in der Solaranlage. Auch bei einem sonstigen Stillstand etwa aus Wartungs- oder Reparaturzwecken der Solaranlage muss für den Solekreislauf nichts speziell berücksichtigt werden.

Neben den technischen Vorteilen hat dies auch den Vorteil, dass es keine Genehmigungsprobleme mit den für die Genehmigung der Erdwärmeanlagen zuständigen Behörden gibt.

Ein Vorteil ist darüber hinaus, dass im Solarkreislauf und im Solekreislauf jeweils ein unterschiedliches und auf das jeweilige Temperaturniveau hin optimiertes Fluid eingesetzt werden kann.

Bevorzugt ist dies im Solekreislauf ein Wasser-Ethylenglykol-Gemisch, dass auch bei den im Solekreislauf auftretenden tiefen Temperaturen eine deutlich geringe Viskosität aufweist als das für den Solarkreislauf bevorzugte Wasser-Propylenglykol-Gemisch. Dadurch werden Druckverluste und auch die Leistungsaufnahme der Pumpe im Solekreislauf reduziert.

Auch die Solaranlage kann getrennt von der Wärmepumpe betrieben werden, wenn also die Wärmepumpenanlage gewartet oder repariert werden muss.

Bevorzugt wird der Wärmeübertrager im Solarrücklauf des Solarkreislaufs angeordnet.

Diese Anordnung ist bevorzugt, da hier eine geringere Temperaturbelastung entsteht.

Der Wärmeübertrager wird ständig durchströmt.

Alternativ könnte ein Wärmeübertrager auch bedarfsgeregelt über ein Umschaltventil angesteuert werden.

Betrachtet man den Stagnationsfall, also den Stillstand einer Solaranlage, so darf dieser natürlich nicht zu Betriebsstörungen führen. Findet ein solcher Stagnationsfall bei einer Sonneneinstrahlung im Kollektor statt, so wird im Stillstandsfall das im Kollektor befindliche Fluid (die Solarflüssigkeit) verdampfen und so das im restlichen System stehende heiße Fluid teilweise in ein Ausdehnungsgefäß verdrängen. Dieses Ausdehnungsgefäß und ein entsprechendes Sicherheitsventil sollten daher zum Solarkollektor hin nicht absperrbar sein beziehungsweise es muss sichergestellt sein, dass auch im Stagnationsfall eine entsprechende Ausdehnung erfolgen kann.

Wünschenswert wäre es auch, wenn generell kein heißer Dampf durch den Wärmeübertrager und somit über den Wärmeübertrager geführt würde. Derartiger heißer Dampf könnte innerhalb des Wärmeübertragers das sekundärseitige Fluid, also die Soleflüssigkeit, unter Umständen ebenfalls verdampfen. Dem kann zwar durch eine ausreichende Dimensionierung eines soleseitigen Ausdehnungsgefäßes sicherheitstechnisch entgegen gewirkt werden, auf die Dauer könnten jedoch ungünstige Auswirkungen auf die Qualität des Fluids im Solekreislaufs nicht ausgeschlossen werden.

Von besonderem Vorteil ist es daher, wenn im Solarkreislauf ein Sicherheitsventil und ein Ausdehnungsgefäß vorgesehen sind.

Es gibt dann zwei alternative Möglichkeiten. Zum einen ist es bevorzugt, wenn das Sicherheitsventil und das Ausdehnungsgefäß zwischen den Solarkollektor und dem Wärmeübertrager angeordnet sind und wenn der Wärmeübertrager durch ein Rückschlagorgan geschützt ist. In diesem Fall erfolgt eine Dampfexpansion direkt über die Solarrücklaufleitung in das Ausdehnungsgefäß.

Alternativ ist es bevorzugt, wenn das Sicherheitsventil und das Ausdehnungsgefäß zwischen dem Verbraucher und dem Wärmeübertrager angeordnet sind, und wenn der Wärmeübertrager durch ein Rückschlagorgan zum Solarkollektor hin geschützt ist. In diesem Fall erfolgt die Dampfexpansion über die Solarvorlaufleitung und den Verbraucher. Auch hierbei ist dies bevorzugt der Pufferspeicher.

Bevorzugt ist es ferner, wenn der Wärmeübertrager innerhalb des Solekreislaufes in der Solevorlaufleitung angeordnet ist.

Wenn der Wärmeübertrager und damit der Wärmeübertrager im Solevorlauf beziehungsweise in der Vorlaufleitung des Solekreislaufs angeordnet ist, kann die in das Fluid im Solekreislauf übertragene Solarwärme sowohl direkt zur Wirkungsgradsteigerung als auch indirekt zur Einspeicherung in das Erdreich genutzt werden.

In einer Ausführungsform wird es bevorzugt, wenn im Solekreislauf zwischen dem Wärmeübertrager und einer Pumpe ein thermisches Mischventil angeordnet ist.

Ein solches optionales thermisches Mischventil dient zur Beimischung im Verdampferkreis und ist insbesondere sinnvoll einzusetzen, falls die Temperatur des Fluids im Solevorlauf durch die solare Unterstützung über die Betriebsgrenzen der Wärmepumpe angehoben wird. Bei einer Reihe von Anlagenkonfigurationen im Bereich von Einfamilienhäusern mit Kollektorflächen von weniger als 20 m², einem relativ hohen Solevolumenstrom und einer Betriebsgrenze von etwa 25 °C wird dieser Zustand jedoch häufig nicht erreicht. Dann kann auf ein solches Mischventil verzichtet werden.

Es ist möglich, den bevorzugt einzusetzenden Plattenwärmeübertrager und weitere Komponenten wie etwa das thermische Mischventil zusammen mit den möglicherweise einzusetzenden Absperrarmaturen, Füll- und Leervorrichtungen sowie einem Schmutzfänger zu einer fertigen Einheit zusammenzufassen. Es ist auch möglich, eine vorhandene hydraulische Standardeinheit für eine Solestation ohne die erfindungsgemäß mögliche solare Soleanhebung nachträglich aufzubauen.

Da die Leitungsquerschnitte eines Solarkreislaufs in der Regel deutlich kleiner sind, als die Leitungsquerschnitte eines Solekreislaufs, wird eine Anordnung bevorzugt bei der diese zusätzlichen Aggregate in den Solekreislauf eingebaut werden. Die Leitungen des Solarkreislaufs werden dann an diese Station herangeführt und ebenfalls angeschlossen.

Es ist möglich, eine solche Station dann werksseitig diffusionsdicht zu isolieren, beispielsweise mit einer aus der DE 20 2008 002 802 U1 bekannten Isolierschale.

Möglich ist es auch, in einer vorisolierten Station diese Aggregate mit einer Soleumwälzpumpe, dem Volumenstromanzeiger und weiteren Elementen sowie allen im Solekreislauf erforderlichen Armaturen zu vereinigen. Dadurch lässt sich mit einer fertigkonfektionierten Komponentenauswahl dem Anlagenerrichter eine optimal auf eine zugehörige Wärmepumpe abgestimmte Anlage anbieten.

Er hat somit Planungssicherheit, Kostensicherheit und einfache Isolierungsmöglichkeiten nebst schneller Montage.

Im folgenden werden an Hand der Zeichnung zwei Ausführungsbeispiele der Erfindung näher beschrieben. Es zeigen:
- **Figur 1**: eine schematische Darstellung einer ersten Ausführungsform der erfindungsgemäßen Anordnung; und
- **Figur 2**: eine schematische Darstellung einer zweiten Ausführungsform der erfindungsgemäßen Anordnung.

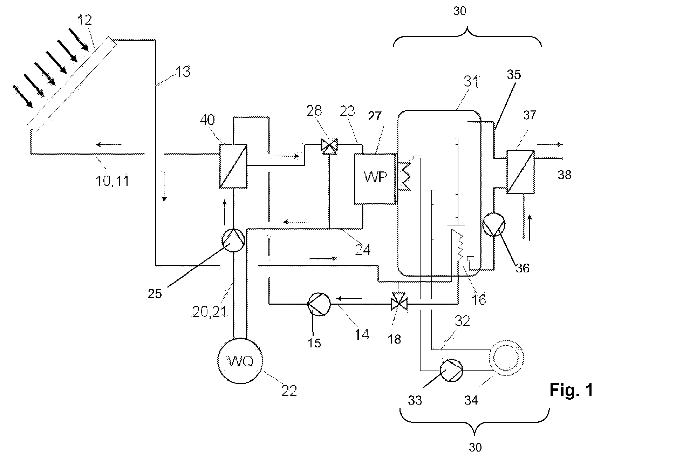

Bei der in der **Figur 1** dargestellten Anordnung sind ein Solarkreislauf 10 und ein Solekreislauf 20 dargestellt.

Der Solarkreislauf 10 führt ein erstes Fluid 11. Dieses Fluid 11 ist ein Gemisch aus Wasser mit Zusätzen wie beispielsweise Propylenglykol. Dieses Fluid 11 wird in einem Solarkollektor 12 durch die Sonneneinstrahlung erwärmt. Das erwärmte Fluid 11 strömt dann durch einen Solarvorlauf 13 vom Solarkollektor 12 hin zu einer Verbraucheranordnung 30, die noch im folgenden näher erörtert wird und in der dargestellten Ausführungsform einen Pufferspeicher 31 aufweist.

In diesem Bereich ist ein Wärmeübertrager 16 vorgesehen, der in dem Pufferspeicher 31 integriert ist. In dem Wärmeübertrager 16 gibt das Fluid 11 die aufgenommene Wärme ab und verlässt in kühlerem Zustand den Pufferspeicher 31 aus der Verbraucheranordnung 30.

Nach dem das Fluid 11 im Pufferspeicher 31 die in dem Solarkollektor 12 aufgenommene Wärme wieder abgegeben hat, läuft es durch einen Solarrücklauf 14 wieder zum Solarkollektor 12. Eine Fördereinrichtung 15, beispielsweise eine Pumpe, ist im Solarrücklauf 14 angeordnet und sorgt für die Strömung des Fluides 11 im gesamten Solarkreislauf 10.

Die Verbraucheranordnung 30 weist wie erwähnt in dem dargestellten Beispiel einen Pufferspeicher 31 auf. Es gibt Ausführungsformen, in denen das im Solarkollektor 12 erwärmte Fluid 11 über den Solarvorlauf 13 in diesen Pufferspeicher 31 eingegeben wird, etwa im Falle eines Schichtenladers, und wobei dann anderes, in der Verbraucheranordnung 30 beziehungsweise innerhalb des Pufferspeichers 31 abgekühltes Fluid durch den Solarrücklauf 14 wieder zum Solarkollektor 12 geführt wird.

Von dem Pufferspeicher 31 aus führt ein erster verbraucherseitiger Kreislauf 32 zu einem Verbraucher 34. Dieser Verbraucher 34 kann beispielsweise eine Heizung sein. Der Verbraucher 34 ist hier rein schematisch dargestellt. Das Fluid in diesem ersten verbraucherseitigen Kreislauf 32 ist das in dem Pufferspeicher 31 erwärmte Fluid. Es wird im Allgemeinen nicht das Fluid 11 aus dem Solarkreislauf 10 sein, obwohl es Ausführungsformen geben könnte, in denen dies der Fall ist.

Das Fluid in diesem ersten verbraucherseitigen Kreislauf 32 wird durch eine Fördereinrichtung 33 gefördert, beispielsweise durch eine Pumpe.

Nachdem die Wärme in dem Verbraucher 34 (also beispielsweise in der Heizung) abgegeben und dementsprechend verbraucht worden ist, kehrt das nun wiederum abgekühlte Fluid in dem ersten verbraucherseitigen Kreislauf 32 wieder in den Pufferspeicher 31 zurück.

Aus dem Pufferspeicher 31 der Verbraucheranordnung 30 führt außerdem ein zweiter verbraucherseitiger Kreislauf 35 zu einem Wärmetauscher 37. In diesem zweiten verbraucherseitigem Kreislauf 35 geschieht die Förderung des Fluides mittels einer Fördereinrichtung 36, die ebenfalls eine Pumpe sein kann. Das Fluid in diesem zweiten verbraucherseitigem Kreislauf 35 gibt in dem Wärmeübertrager 37 seine Wärme an ein Brauchwasser ab, das anschließend als erwärmtes Trinkwasser 38 genutzt werden kann. Dieses erwärmte Trinkwasser 38 ist demzufolge ein anderes Fluid als das aus dem Pufferspeicher 31.

Nachdem das Fluid in dem zweiten verbraucherseitigen Kreislauf 35 seine Wärme in dem Wärmeübertrager 37 an das Trinkwasser abgegeben hat, strömt es wieder zurück in den Pufferspeicher 31.

Es ist auch möglich, weitere, hier nicht dargestellte Verbraucher der Verbraucheranordnung 30 an den Pufferspeicher 31 anzuschließen.

Der Solarkollektor 12 kann natürlich nur so lange Wärme aufnehmen, wie die Wärmeeinstrahlung ein höheres Wärmeangebot bildet, als die Temperatur des Fluids 11 im Solarkreislauf 10 im Bereich des Solarkollektors 12 bereits beträgt. Gibt es keine oder zu wenig Sonneneinstrahlung, so kann das Fluid 11 nicht erwärmt werden und der Solarkreislauf 10 muss das Fluid auch nicht mehr fördern, da es keine Wärme zu transportieren gibt.

Zu der Verbraucheranordnung 30 und dem dargestellten Pufferspeicher 31 kann auch Wärme noch aus weiteren Quellen zugeführt werden, etwa durch einen Brenner (nicht dargestellt) und/oder durch einen Solekreislauf 20. In dem Solekreislauf 20 befindet sich ein zweites Fluid 21, nämlich sogenannte Sole. Dieses Fluid kann beispielsweise ein Gemisch aus Wasser und Ethylenglykol sein. Dieses zweite Fluid 21 in dem Solekreislauf 20 wird gefördert von einer Fördereinrichtung 25. Es strömt von einer Einrichtung 22 zur Sammlung von Erdwärme oder Umweltwärme, also beispielsweise von einer Erdsonde über eine Wärmepumpe 27 und einen Solevorlauf 23 zu der Verbraucheranordnung 30 und von der Vebraucheranordnung 30 wiederum über einen Solerücklauf 24 zur Einrichtung 22 zur Sammlung von Erdwärme oder Umweltwärme.

Die Einrichtung 22 zur Sammlung von Erdwärme oder Umweltwärme befindet sich im Erdboden und nimmt dort Wärme aus der Umgebung auf. Anstelle einer Erdsonde könnte auch ein Erdkollektor, ein Zwischenspeicher (Eis/Wasser) oder ein anderes, zur Gewinnung von Energie aus Erdwärme oder Umweltwärme geeignetes Element eingesetzt werden. Diese Wärme wird in der Wärmepumpe 27 auf ein höheres Temperaturniveau umgesetzt, um dann von diesem höheren Temperaturniveau aus Wärme an die Verbraucheranordnung 30 mit dem dargestellten Pufferspeicher 31 abgeben zu können.

Nach der Abgabe dieser Wärme geht dann die Sole wieder zurück in den Erdboden zur Erdsonde.

Wie man in der Figur 1 sieht, ist jetzt in der dargestellten Ausführungsform der Erfindung insbesondere ein zusätzlicher Wärmeübertrager 40 vorgesehen.

Wärmeübertrager werden häufig auch vereinfachend als Wärmetauscher bezeichnet.

Dieser Wärmeübertrager 40 befindet sich in dem Solarrücklauf 14, der von der Verbraucheranordnung 30 das abgekühlte Fluid 11 zurück zum Solarkollektor 12 fördert. Dieses Fluid 11 hat also die im Solarkollektor 12 zur Verfügung stehende und vom Fluid 11 aufgenommene Wärme über den Solarvorlauf 13 in dem integrierten Wärmeübertrager 16 an den Pufferspeicher 31 abgegeben und hat nunmehr eine Temperatur, die zur Aufnahme weiterer Wärme im Solarkollektor 12 vorgesehen ist. Diese Temperatur wäre also zu niedrig, um im Pufferspeicher 31 noch zur Abgabe von Wärmeenergie herangezogen zu werden. Ist die Sonneneinstrahlung schon relativ gering und die damit erzielbare Temperatur im Solarvorlauf 13 kleiner als die Temperatur im Pufferspeicher 31, so lässt sich der Transport des Fluides 11 durch den Solarkreislauf 10 von der Energiebilanz nicht mehr positiv darstellen.

Von dem Solekreislauf 20 führt jetzt in der dargestellten Ausführungsform der Erfindung der Solevorlauf 23 von der Einrichtung 22 zur Sammlung von Erdwärme oder Umweltwärme zu dem Wärmeübertrager 40. Dieser Solevorlauf 23 hat zwar in der Einrichtung 22 zur Sammlung von Erdwärme wie vorgesehen die Energie aufgenommen, ist aber nach wie vor im Vergleich zum Solarkreislauf 10 sehr kühl und hat eine Temperatur um meistens etwa 5 °C bis 10 °C. Er ist also in der Lage, in dem Wärmeübertrager 40 das von dem ersten Fluid 11 im Solarrücklauf 14 zur Verfügung gestellte Wärmeangebot anzunehmen und sein Temperaturniveau weiter zu erhöhen. Dieses durch das Wärmeangebot weiter erwärmte zweite Fluid 21 wird dann im Solevorlauf 23 weiter zu einer Wärmepumpe 27 gefördert, in der nun mit geringerem Energieaufwand die gewünschte Temperatur des Fluids im Pufferspeicher 31 von der Wärmepumpe 27 bereitgestellt werden kann. Nach dem Durchlaufen der Wärmepumpe 27 wird das abgekühlte Fluid 21 über den Solerücklauf 24 der Einrichtung 22 zur Sammlung von Erdwärme oder Umweltwärme im Erdboden zugeführt.

Betrachtet man sich demgegenüber den Solarkreislauf 10, so geht jetzt in dem Wärmeübertrager 40 Wärmeenergie aus dem ersten Fluid 11 verloren beziehungsweise geht wie erwähnt an das zweite Fluid 21 im Solekreislauf über. Es findet also eine weitere Abkühlung des ersten Fluides 11 im Solarrücklauf 14 statt, so dass das abgekühlte Fluid 11 jetzt den Solarkollektor mit einer noch niedrigeren Temperatur als herkömmlich erreicht.

Dadurch, dass die Temperatur niedriger ist, besteht jedoch eine bessere Möglichkeit, auch bei geringerer Sonneneinstrahlung noch Wärme im Solarkollektor 12 in das Fluid 11 einzutragen und dieses zu erwärmen.

Das Einschalten der erfindungsgemäß möglichen solaren Soleanhebung findet wie folgt statt: Über eine auch herkömmlich vorhandene Regelung des Solarkreislaufs werden zunächst ständig die Temperaturen im Pufferspeicher 31 der Verbraucheranordnung 30 und im Solarkollektor 12 miteinander verglichen. Die Beladung des Pufferspeichers 31 erfolgt wie herkömmlich erst bei einem ausreichendem Strahlungsangebot im Solarkollektor 12 und damit bei entsprechend hohen Temperaturen im Solarkollektor 12, die dann über den Solarvorlauf 13 weiter gegeben werden können.

Reicht jedoch die Temperatur im Solarkollektor 12 nicht dazu aus, um effektiv den Pufferspeicher 31 zu beladen, dann werden sowohl die Pumpe im Solarkreislauf 10 als auch die Pumpe im Solekreislauf 20 eingeschaltet.

Darüber hinaus wird ein Umschaltventil 18 betätigt, dass in dem Solarkreislauf 10 einen Kurzschluss des Bereiches des in den Pufferspeicher 31 integrierten Wärmeübertragers 16 herbeiführt.

Das Fluid 11 im Solarkreislauf 10 mit seiner für die Beladung des Pufferspeichers 31 nicht mehr hinreichenden, gleichwohl aber deutlich oberhalb der Zimmertemperatur liegenden Temperatur strömt also von dem Solarkollektor 12 über den Solarvorlauf 13 bis hin zum Umschaltventil 18. Es kürzt hier den Strömungsverlauf ab und erreicht nicht den Pufferspeicher 31, sondern wird von der Fördereinrichtung 14 weiter zu dem oben erörterten Wärmeübertrager 40 transportiert. In diesem Wärmeübertrager 40 begegnet das Fluid 11 dem deutlich kühleren Fluid 21 aus dem Solekreislauf 20 und gibt die in ihm enthaltene Wärmeenergie deshalb an dieses Fluid 21 im Solekreislauf ab.

Danach erreicht das weiter abgekühlte Fluid wieder den Solarkollektor 12.

Das Fluid 21 im Solekreislauf wird von der Erdsonde oder der sonstigen Einrichtung 22 zur Sammlung von Erdwärme oder Umweltwärme über den Solevorlauf 23 mittels der Fördereinrichtung 25 zu dem Wärmeübertrager 40 geführt. Dieses Fluid 21 kommt zu diesem Moment direkt aus der Erde und hat eine sehr niedrige Temperatur. Es nimmt daher die ihm zur Verfügung gestellte Wärmeenergie aus dem Solarfluid 11 im Wärmeübertrager 40 auf und strömt deutlich erwärmt weiter über ein thermisches Mischventil 28 zu der Wärmepumpe 27. In der Wärmepumpe 27 wird es mithilfe elektrischer Energie weiter erwärmt, wobei jetzt weniger elektrische Energie als herkömmlich ohne den Wärmeübertrager 40 und die erfindungsgemäße Konzeption benötigt wird. Die Wärme wird von der Wärmepumpe 27 in der dargestellten Ausführungsform unmittelbar an das Fluid in dem Pufferspeicher 31 übertragen.

Das abgekühlte Fluid 21 im Solekreislauf 20 läuft danach über den Solerücklauf 24 wieder zurück zur Einrichtung 22 zur Sammlung von Erdwärme oder Umweltwärme.

Wird nun die Temperatur des Fluids 11 im Solarkreislauf 10 durch die Temperatur des Fluids 21 (die Sole) im Solekreislauf 20 stark abgekühlt, kann die Temperatur der Oberfläche der Rohrleitungen zum Solarkollektor 12 und auch am Absorber selbst unter den Taupunkt absinken und somit Wasser aus der Umgebungsluft kondensieren.

Um die dann möglicherweise auftretenden Feuchteschäden an der Dämmung, am Solarkollektor 12 und am Bauwerk zu vermeiden, wird von vornherein die Drehzahl der Fördereinrichtung 15 im Solarkreislauf 10 mittels einer geeigneten Sensorentechnik geregelt.

Um am Verdampfereintritt der Wärmepumpe 27 keine Überschreitung des zulässigen Temperaturbereiches zu bekommen, kann bei Bedarf die Temperatur im Solevorlauf 23 über ein thermisches Mischventil 28 durch Beimischung von kälterem Rücklaufmedium aus dem Solerücklauf 24 selbsttätig beigemischt werden.

Da bei der erfindungsgemäß möglichen solaren Soleanhebung die Temperatur im Solarvorlauf 13 unter der Temperatur im Pufferspeicher 31 liegt, muss selbstverständlich vermieden werden, dass der Pufferspeicher 31 dadurch auskühlt, wozu die dargestellte Konzeption mit dem Umschaltventil 18 dienen kann.

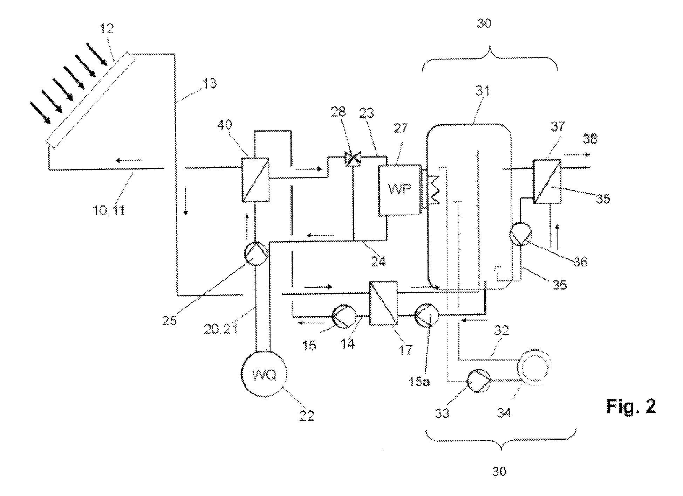

In der **Figur 2** ist eine zweite Ausführungsform der Erfindung dargestellt. Die wesentlichen Elemente entsprechen der Ausführungsform aus der Figur 1. Insbesondere der Solekreislauf 20 mit seinen Elementen, also dem Fluid 21, der Einrichtung 22 zur Sammlung von Erdwärme oder Umweltwärme, dem Solevorlauf 23, dem Solerücklauf 24 und der Fördereinrichtung 25 sowie der Wärmepumpe 27 und dem Mischventil 28 sind unverändert.

Der Solarkreislauf 10 unterscheidet sich jedoch in einigen Elementen. Es wird in diesem Fall das Fluid 11 von dem Solarkollektor 12 über den Solarvorlauf 13 mittels der Fördereinrichtung 15 nicht direkt zu einem in dem Pufferspeicher 31 integrierten Wärmetauscher geführt, sondern zu einem externen Wärmetauscher 17. Es läuft von dort direkt wieder über den Solarrücklauf 14 zum Wärmeübertrager 40 und dann zum Solarkollektor 12.

Es handelt sich hier also im Gegensatz zur Figur 1 nicht um eine Einstranganlage, sondern um ein Trennsystem für den Solarkreislauf 10, das mit einem externen Plattenwärmeübertrager 17 und zwei Umweltspumpen als Fördereinrichtungen 15 und 15a arbeitet. Der Solarkreislauf 10 ist also zweigeteilt.

In diesem Fall kann ein Auskühlen des Pufferspeichers 31 durch Zuführen von zu kaltem Fluid 11 dadurch vermieden werden, indem einfach die speicherseitige Fördereinrichtung 15a im Solarkreislauf 10 ausgeschaltet wird.

Eine ohnehin meist vorhandene Schwerkraftbremse (nicht dargestellt) verhindert die Auskühlung des Pufferspeichers 31 über den Solarkreislauf 10 durch Schwerkraftzirkulation.

### Bezugszeichenliste

- 10: Solarkreislauf
- 11: erstes Fluid (im Solarkreislauf)
- 12: Solarkollektor
- 13: Solarvorlaufleitung
- 14: Solarrücklaufleitung
- 15: Fördereinrichtung im Solarkreislauf
- 15a: zweite Fördereinrichtung im Solarkreislauf
- 16: integrierter Wärmeübertrager im Solarkreislauf
- 17: externer Wärmeübertrager im Solarkreislauf
- 18: Umschaltventil

- 20: Solekreislauf
- 21: zweites Fluid (im Solekreislauf)
- 22: Einrichtung zur Sammlung von Erdwärme oder Umweltwärme, beispielsweise Erdsonde
- 23: Solevorlaufleitung
- 24: Solerücklaufleitung
- 25: Fördereinrichtung im Solekreislauf
- 27: Wärmepumpe im Solekreislauf
- 28: Mischventil

- 30: Verbraucheranordnung
- 31: Pufferspeicher
- 32: erster verbraucherseitiger Kreislauf
- 33: Pumpe
- 34: Verbraucher (Heizung)
- 35: zweiter verbrauchsseitiger Kreislauf
- 36: Pumpe
- 37: Wärmeübertrager (Warmwasser)
- 38: warmes Trinkwasser
- 40: Wärmeübertrager

## Patentansprüche

1. Anordnung zur Bereitstellung von warmem Brauchwasser,
mit einem Solarkreislauf (10), in dem ein erstes Fluid (11) gefördert wird, wobei der Solarkreislauf (10) einen Solarkollektor (12), eine Solarvorlaufleitung (13) vom Solarkollektor (12) zu einer Verbraucheranordnung (30) und eine Solarrücklaufleitung (14) von der Verbraucheranordnung (30) zum Solarkollektor (12) aufweist,
mit einem Solekreislauf (20), in dem eine zweites Fluid (21) gefördert wird, wobei der Solekreislauf (20) eine Einrichtung (22) zur Sammlung von Erdwärme oder Umweltwärme, eine Wärmepumpe (27), eine Solevorlaufleitung (23) von der Einrichtung (22) zur Sammlung von Erdwärme über die Wärmepumpe (27) zur Verbraucheranordnung (30) und eine Solerücklaufleitung (24) von der Verbraucheranordnung (30) zur Einrichtung (22) zur Sammlung von Erdwärme aufweist,
**dadurch gekennzeichnet,**
**dass** ein Wärmeübertrager (40) vorgesehen ist, durch den sowohl der Solarkreislauf (10) als auch der Solekreislauf (20) verlaufen, und
**dass** der Wärmeübertrager (40) so aufgebaut und angeordnet ist, dass in ihm Wärme aus dem ersten Fluid (11) im Solarkreislauf (10) auf das zweite Fluid (21) im Solekreislauf (20) übertragen wird.

2. Anordnung zur Bereitstellung von warmem Brauchwasser nach Anspruch 1, **dadurch gekennzeichnet,**
**dass** die Verbraucheranordnung (30) einen Pufferspeicher (31) aufweist, der seinerseits warmes Brauchwasser oder ein warmes drittes Fluid für einen oder mehrere verbraucherseitige Kreisläufe (32, 35) zur Verfügung stellt.

3. Anordnung zur Bereitstellung von warmem Brauchwasser nach Anspruch 1 oder 2, **dadurch gekennzeichnet,**
**dass** der Wärmeübertrager (40) innerhalb des Solarkreislaufes (10) in der Solarrücklaufleitung (14) angeordnet ist.

4. Anordnung zur Bereitstellung von warmem Brauchwasser nach einem der vorstehenden Ansprüche,
**dadurch gekennzeichnet,**
**dass** der Wärmeübertrager (40) innerhalb des Solekreislaufes (20) in der Solevorlaufleitung (23) angeordnet ist.

5. Anordnung zur Bereitstellung von warmem Brauchwasser nach einem der vorstehenden Ansprüche,
**dadurch gekennzeichnet,**
**dass** der Wärmeübertrager (40) ein Plattenwärmeübertrager ist.

6. Anordnung zur Bereitstellung von warmem Brauchwasser nach einem der vorstehenden Ansprüche
**dadurch gekennzeichnet,**
**dass** im Solarkreislauf (10) ein Sicherheitsventil (15) und ein Ausdehnungsgefäß vorgesehen sind.

7. Anordnung zur Bereitstellung von warmem Brauchwasser nach Anspruch 6,
**dadurch gekennzeichnet,**
**dass** das Sicherheitsventil und das Ausdehnungsgefäß zwischen dem Solarkollektor (12) und dem Wärmeübertrager (40) angeordnet sind und
**dass** der Wärmeübertrager (40) durch ein Rückschlagorgan geschützt ist.

8. Anordnung zur Bereitstellung von warmem Brauchwasser nach Anspruch 7,
**dadurch gekennzeichnet,**
**dass** das Sicherheitsventil und das Ausdehnungsgefäß zwischen der Verbraucheranordnung (30) und dem Wärmeübertrager (40) angeordnet sind, und
**dass** der Wärmeübertrager (40) durch ein Rückschlagorgan zum Solarkollektor (12) hin geschützt ist.

9. Anordnung zur Bereitstellung von warmem Brauchwasser nach einem der vorstehenden Ansprüche
**dadurch gekennzeichnet,**
**dass** das im Solekreislauf (20) zwischen dem Wärmeübertrager (40) und der Erdwärmepumpe (27) ein thermisches Mischventil (28) angeordnet ist.

10. Anordnung zur Bereitstellung von Waren und Brauchwasser nach einem der vorstehenden Ansprüche,
**dadurch gekennzeichnet,**
**dass** in dem Solarkreislauf (10) im Solarvorlauf (13) eine Kurzschlussleitung zur Umgehung der Verbraucheranordnung (30) vorgesehen ist, und
**dass** ein Umschaltventil (18) vorgesehen ist, dass eine Umleitung des Fluides (11) durch die Kurzschlussleitung ermöglicht, wenn die Temperatur des Fluids (11) unterhalb der von der Verbraucheranordnung (30) benötigten Temperatur liegt.

11. Anordnung zur Bereitstellung von Waren und Brauchwasser nach einem der vorstehenden Ansprüche,
**dadurch gekennzeichnet,**
**dass** der Wärmetauscher (40) mit den Fördereinrichtungen (15, 15a, 25) im Solarkreislauf (10) und Solekreislauf (20) und gegebenenfalls dem Umschaltventil (18) und dem Mischventil (28) in einer vorgefertigten Station mit diffusionshemmender Schale angeordnet sind.
